(19) Europäisches Patentamt
European Patent Office
Office européen des brevets

(11) Veröffentlichungsnummer: **0 512 308 B1**

(12) # EUROPÄISCHE PATENTSCHRIFT

(45) Veröffentlichungstag der Patentschrift: **19.07.95**

(51) Int. Cl.$^{6}$: **C08F 20/30**, C09K 19/38

(21) Anmeldenummer: **92106756.7**

(22) Anmeldetag: **21.04.92**

(54) **Flüssigkristalline Polymere mit nahezu einheitlichem Molekulargewicht.**

(30) Priorität: **10.05.91 DE 4115415**

(43) Veröffentlichungstag der Anmeldung:
**11.11.92 Patentblatt 92/46**

(45) Bekanntmachung des Hinweises auf die Patenterteilung:
**19.07.95 Patentblatt 95/29**

(84) Benannte Vertragsstaaten:
**CH DE FR GB IT LI**

(56) Entgegenhaltungen:
**EP-A- 0 184 482**
**EP-A- 0 228 703**
**EP-A- 0 399 279**
**EP-A- 0 412 485**
**WO-A-90/00586**

(73) Patentinhaber: **BASF Aktiengesellschaft**
**Carl-Bosch-Strasse 38**
**D-67063 Ludwigshafen (DE)**

(72) Erfinder: **Bach, Volker, Dr.**
**Robert-Schuman-Strasse 8**
**W-6730 Neustadt (DE)**
Erfinder: **Etzbach, Karl-Heinz, Dr.**
**Carl-Bosch-Ring 55**
**W-6710 Frankenthal (DE)**
Erfinder: **Siemensmeyer, Karl, Dr.**
**Ernst-Ludwig-Kirchner-Strasse 14**
**W-6710 Frankenthal (DE)**

**EP 0 512 308 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue flüssigkristalline Polymere mit nahezu einheitlichem Molekulargewicht, erhältlich durch Polymerisation gleicher oder verschiedener Monomerer der allgemeinen Formel I

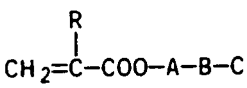

I

in der die Variablen folgende Bedeutung haben:

- R Wasserstoff, Chlor oder Methyl;
- A flexibler, abstandshaltender langkettiger Molekülteil;
- B aus mindestens zwei linear oder angenähert linear miteinander verknüpften aromatischen Kernen aufgebauter mesogener Molekülteil;
- C optisch aktiver, chiraler Molekülteil,

in 0,01 bis 0,1 molarer Lösung in einem inerten organischen Lösungsmittel in Gegenwart von 1 bis 40 mol-%, bezogen auf die Monomeren, eines Radikalstarters bei einer Temperatur zwischen 40 und 60 °C in 100 bis 140 Stunden und anschließende Isolierung des Polymerisationsproduktes aus der Reaktionsmischung.

Weiterhin betrifft die Erfindung die Herstellung dieser Polymeren sowie ihre Verwendung zum Aufbau von Aufzeichnungsschichten für laseroptische und elektrische Aufzeichnungselemente und für die Elektrophotographie sowie zum Aufbau von flüssigkristallinen Anzeigeelementen.

Chirale, smektische, flüssigkristalline Polymere, die beim Abkühlen aus der flüssigkristallinen Phase glasartig unter Ausbildung einer Schichtstruktur erstarren, werden bekanntermaßen auf elektro-optischem Gebiet für viele Zwecke eingesetzt. Zu nennen sind hier beispielsweise optische Speichersysteme (DE-A-38 27 603 und DE-A-39 17 196), die Elektrophotographie (DE-A-39 30 667), flüssigkristalline Anzeigeelemente wie Displays (Mol.Cryst.Liq.Cryst. 114, S. 151-187 (1984)) sowie bei gleichzeitig vorliegendem ferroelektrischen Verhalten elektrische Speichersysteme (Ferroelectrics 104, S. 241-256 (1990)).

In der Schichtstruktur ferroelektrischer $S_{C^*}$-Phasen sind die Moleküllängsachsen innerhalb der einzelnen Schicht gegenüber der Schichtnormalen $\vec{z}$ geneigt. Die Richtung dieser Neigung wird durch den Direktor $\vec{n}$ angegeben, der Winkel zwischen $\vec{z}$ und $\vec{n}$ ist der sog. Tiltwinkel $\Theta$. $S_{C^*}$-Phasen weisen zwei stabile Zustände mit entgegengesetzter Richtung von $\vec{n}$ auf, zwischen denen durch Anlegen eines elektrischen Feldes schnell geschaltet werden kann (elektro-optischer Effekt).

$S_{C^*}$-Phasen werden u.a. von Polymeren mit chiralen mesogenen Seitengruppen gebildet, wie sie beispielsweise in der DE-A-39 17 196 und der dort genannten Literatur beschrieben werden.

Die bislang hergestellten flüssigkristallinen Polymere stellen jedoch immer nur Gemische von Polymeren vieler verschiedener Polymerisationsgrade bzw. Molekulargewichte dar, wodurch ihre Anwendungseigenschaften deutlich verschlechtert werden, wie es sich z.B. in hohen Schaltzeiten oder kleinen Zustandsbereichen schaltbarer Phasen äußert.

Der Erfindung lag daher die Aufgabe zugrunde, flüssigkristalline Polymere bereitzustellen, die nahezu einheitliche Molekulargewichte und damit verbesserte Anwendungseigenschaften aufweisen.

Demgemäß wurden die eingangs definierten flüssigkristallinen Polymere gefunden.

Weiterhin wurde das hierdurch definierte Verfahren zur Herstellung dieser Polymere gefunden.

Außerdem wurde die Verwendung dieser Polymere zum Aufbau von Aufzeichnungsschichten für laseroptische und elektrische Aufzeichnungselemente und für die Elektrophotographie sowie zum Aufbau von flüssigkristallinen Anzeigeelementen gefunden.

Die erfindungsgemäßen flüssigkristallinen Polymere weisen nahezu einheitliche Molekulargewichte auf. Ihre Uneinheitlichkeiten betragen in der Regel ≦ 0,1.

Die Uneinheitlichkeit U ist bekanntermaßen wie folgt definiert:

$$U = D - 1$$

Die Dispersität D entspricht dem Quotienten aus Gewichtsmittel-Molekulargewicht $\overline{M}_w$ und Zahlenmittel-Molekulargewicht $\overline{M}_n$:

$$D = \frac{\overline{M}_w}{\overline{M}_n}$$

$$\text{mit } \overline{M}_w = \frac{\sum_{i=1}^{\infty} n_i M_i^2}{\sum_{i=1}^{\infty} n_i M_i} \quad \text{und} \quad \overline{M}_n = \frac{\sum_{i=1}^{\infty} n_i M_i}{\sum_{i=1}^{\infty} n_i}$$

$n_i$ = Anzahl der Polymermoleküle aus i Monomeren

$M_i$ = Molekulargewicht des Polymermoleküls aus i Monomeren

Eine bekannte Methode zur Bestimmung der Uneinheitlichkeit ist die beispielsweise im Analytiker-Taschenbuch Bd. 4, S. 415-442, Springer-Verlag (1984) beschriebene Gelpermeationschromatographie.

Die zugrundeliegenden Monomere der Formel I

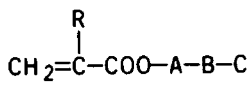

I

und ihre Herstellung sind aus der DE-A-39 17 196 bekannt.

Der Rest R bedeutet dabei neben Chlor und Methyl bevorzugt Wasserstoff.

Bei dem Molekülteil A handelt es sich vorzugsweise um eine Alkylengruppe $-(CH_2)_n-$ mit n = 2 bis 20, bevorzugt mit n = 6 bis 11.

Der mesogene Molekülteil B ist aus mindestens zwei linear oder angenähert linear miteinander verknüpften aromatischen Kernen aufgebaut.

Bevorzugte Gruppierungen B sind beispielsweise solche der Formeln II bis V:

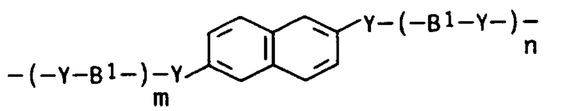

II

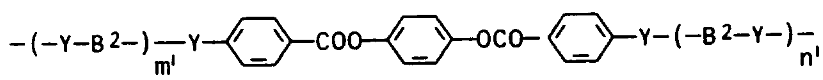

III

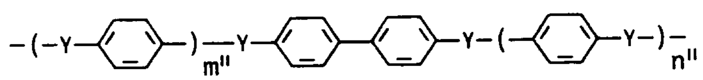

IV

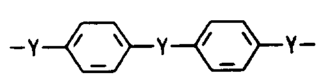

V

wobei die Variablen folgende Bedeutung haben:

- $B^1$ gleiche oder verschiedene der folgenden Reste: p-Phenylen oder Biphen-4,4-ylen;
- $B^2$ gleiche oder verschiedene der folgenden Reste: p-Phenylen, Biphen-4,4-ylen oder Naphth-2,6-ylen;
- Y gleiche oder verschiedene der folgenden Gruppen: bevorzugt -O-, -COO- oder -OCO-, daneben auch $-CH_2-O-$, $-O-CH_2-$, -COS-, -SCO- oder eine chemische Bindung;
- m, n 0, 1 oder 2, wobei m und n nicht gleichzeitig 0 bedeuten dürfen;
- m', n' unabhängig voneinander 0, 1 oder 2;
- m'', n'' unabhängig voneinander 0 oder 1.

Beispiele für besonders bevorzugte Gruppierungen B sind folgende:

II:

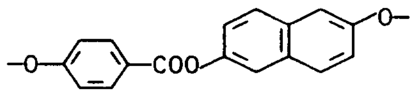

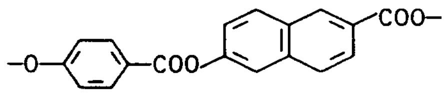

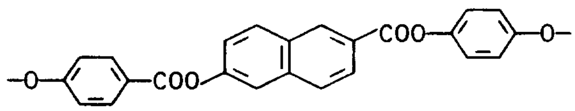

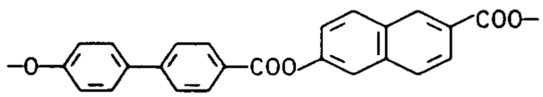

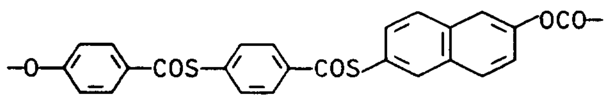

III:

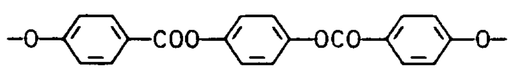

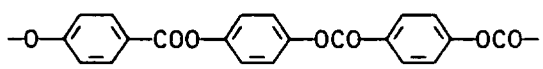

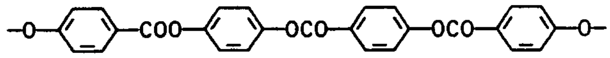

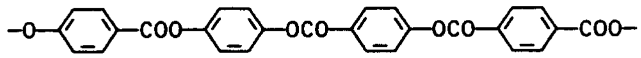

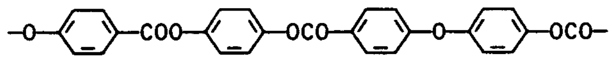

IV:

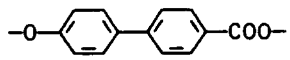

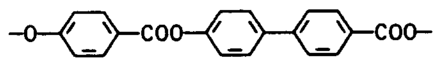

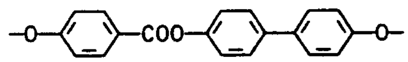

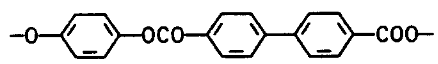

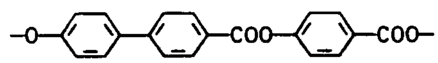

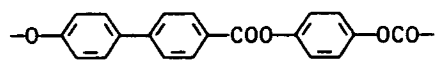

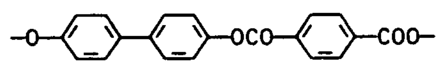

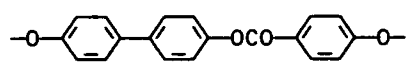

V:

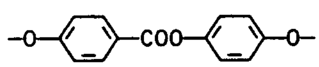

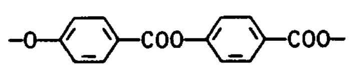

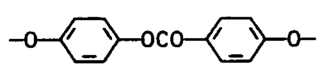

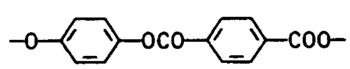

Beispiele für den chiralen Molekülteil C sind vorzugsweise solche der Formeln VI bis IX:

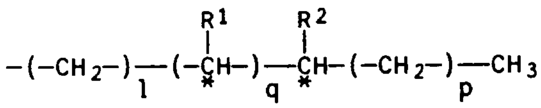

VI

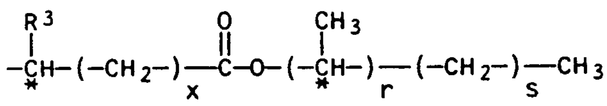

VII

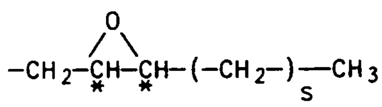

VIII

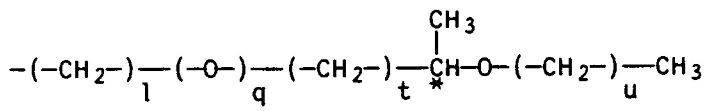

IX

wobei die Variablen folgende Bedeutung haben:

$R^1$ Halogen wie Chlor oder Brom oder Methyl;
$R^2$ Halogen wie Chlor oder Brom, Cyano oder Methyl;
$R^3$ Methyl oder Trifluormethyl;
l,t,u 0 oder 1 bis 10;
q 0 oder 1;
p 0 oder 1 bis 10, wobei p nicht gleich 0 sein darf, wenn $R^2$ eine Methylgruppe bedeutet;
x,r 0 oder 1;
s 1 bis 3.

Besonders bevorzugt sind Reste der Formel VII.

Beispiele für den Rest C sind die folgenden Gruppen:

VI:

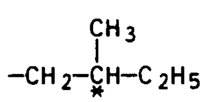 , 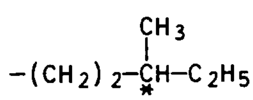 , 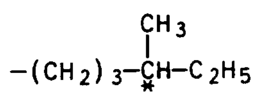 ,

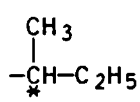 , 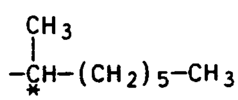 , 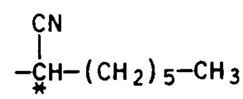 ,

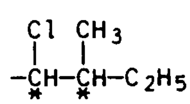 , 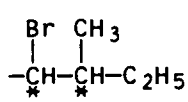 und 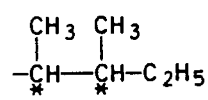

VII:

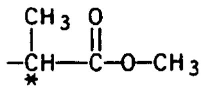 , 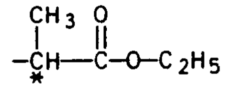 , 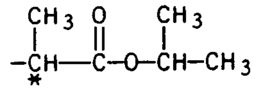 ,

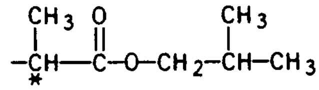 , 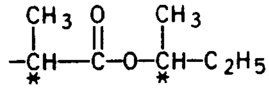 ,

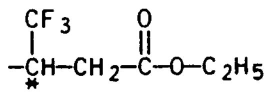 und 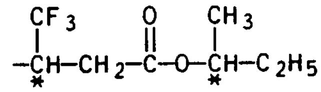

VIII:

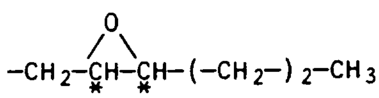 , 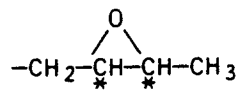 und

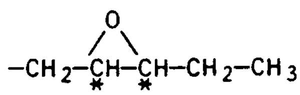

IX:

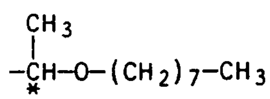 , 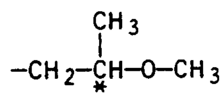 , 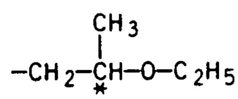 ,

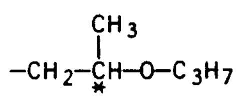 , 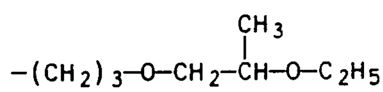 ,

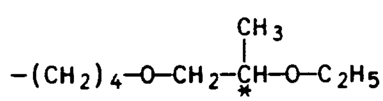 und 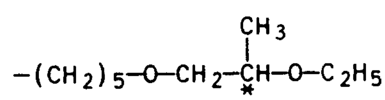

Weiterhin besonders bevorzugte Reste C sind Camphan-2-yl, p-Menthan-3-yl und vor allem Pinan-3-yl.

Die erfindungsgemäßen flüssigkristallinen Polymere sind durch Polymerisation der Monomere I unter bestimmten, genau einzuhaltenden Bedingungen erhältlich.

Dabei werden die analytisch reinen, d.h. chromatographisch gereinigten und mehrfach umkristallisierten Monomere I in einem absoluten inerten Lösungsmittel wie Toluol, Dioxan, Dimethylformamid und besonders Tetrahydrofuran gelöst. Die Monomerenkonzentration in der Lösung soll dabei 0,01 bis 0,1 mol/l, vorzugsweise 0,02 bis 0,06 mol/l betragen.

In diese Lösung wird dann zweckmäßigerweise ein Schutzgas wie Stickstoff oder vor allem Argon eingeleitet. Danach werden 1 bis 40 mol-%, bevorzugt 1 bis 20 mol-%, bezogen auf die Monomeren, eines Radikalstarters zugegeben. Bevorzugt sind hierbei Starter, die bei einer Temperatur von etwa 50 °C eine mittlere Zerfallsrate haben, beispielsweise 2,2'-Azo-bis-(2-methylpropionsäurenitril).

Nach erneuter Schutzgaseinleitung wird die Lösung dann auf eine Temperatur zwischen 40 und 60 °C, bevorzugt auf 50 °C thermostatisiert und 100 bis 140 h, vorzugsweise 100 bis 120 h bei dieser Temperatur gehalten.

Die Aufarbeitung des Reaktionsgemisches erfolgt in üblicher Weise. Bei einer bevorzugten Arbeitsweise wird zunächst über einen Millipore®-Filter (Fa. Millipore) filtriert. Anschließend wird das Polymerisationsprodukt durch Zugabe von absolutem Methanol aus dem Filtrat ausgefällt, abfiltriert und mehrfach aus Tetrahydrofuran durch Zugabe von Petrolether (Ligroin, Sdp. 30 bis 75 °C) umgefällt. Das Produkt wird dann abfiltriert und im Hochvakuum getrocknet.

Wesentlich für die erfindungsgemäße Durchführung der Polymerisation sind die Konzentration der Monomerenlösung, die Art und Menge des Radikalstarters, die Reaktionstemperatur und die Reaktionszeit. Werden die genannten Reaktionsbedingungen eingehalten, so gelingt es, flüssigkristalline Polymere mit Uneinheitlichkeiten ≦ 0,1 reproduzierbar herzustellen.

Die erfindungsgemäßen flüssigkristallinen Polymere weisen gegenüber den herkömmlich hergestellten Polymeren neben größeren Zustandsbereichen der $S_{C^*}$-Phase vor allem deutlich höhere Spontanpolarisationen und größere Tiltwinkel Θ auf, so daß sie durch die so erreichbaren größeren Kontraste wesentlich besser zur Herstellung von Aufzeichnungsschichten für laseroptische Aufzeichnungselemente und für elektrographische Verfahren und von flüssigkristallinen Anzeigeelementen geeignet sind. Weisen die erfindungsgemäßen Polymere gleichzeitig ferroelektrisches Verhalten auf, so können sie auch vorteilhaft für die Herstellung elektrischer Aufzeichnungselemente verwendet werden. Bevorzugt werden hierbei erfindungsgemäße Polymere mit Molekulargewichten zwischen 2 000 und 10 000, besonders zwischen 4 000 und 6 000 eingesetzt.

Der Aufbau der Aufzeichnungsschichten folgt dem in der DE-A-39 17 196 für laseroptische Aufzeichnungselemente, in der DE-A-39 30 667 für die Elektrophotographie und in Ferroelectrics 104, S. 241-256 (1990) für elektrische Aufzeichnungselemente beschriebenen Aufbau.

Beispiele

a) Herstellung der flüssigkristallinen Polymere

Beispiel 1

In eine Lösung von 2,0 g (4,6 mmol) des Monomers der Formel Ia

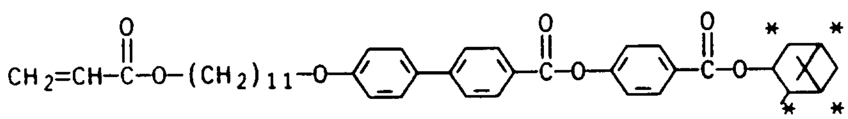

Ia

in 50 ml absolutem Tetrahydrofuran (≙ einer Konzentration von 0,093 mol/l) wurde für 15 min Argon eingeleitet. Nach der Zugabe von 200 mg 2,2'-Azo-bis-(2-methylpropionsäurenitril) wurde erneut für 15 min Argon in die Lösung eingeleitet. Dann wurde die Lösung auf 50 °C thermostatisiert und 120 h bei dieser Temperatur gehalten.

Die Reaktionsmischung wurde anschließend über einen Millipore-Filter (Typ FG, Porengröße 0,2 µm) filtriert. Das Produkt wurde durch Zugabe von Methanol aus dem Filtrat ausgefällt, abfiltriert und zweimal aus Tetrahydrofuran durch Zugabe von Petrolether umgefällt, isoliert und im Hochvakuum getrocknet.

Die Bestimmung seiner Uneinheitlichkeit U erfolgte in üblicher und bekannter Weise aus den gelpermeationschromatographisch mit Polystyrolstandards (Dispersitäten < 1,1) ermittelten mittleren Molekulargewichten $\overline{M}_w$ und $\overline{M}_n$ (Analytiker-Taschenbuch Bd. 4, S. 415-442, Springer Verlag (1984)).

Dazu wurden jeweils 3 Säulen der Abmessungen 7,6 x 600 mm verwendet, die mit PLgel® mit 100, 100, 1000, 1000 nm Porenweite (Fa. Polymer Laboratories; quervernetztes Styrol/Divinylbenzol-Copolymerisat) der Teilchengröße 5 µm gefüllt waren. Als Eluent diente Tetrahydrofuran. Die Durchlaufgeschwindigkeit betrug 1,1 ml/min.

Die Phasensequenz sowie die Klärtemperatur $T_{Kl}$ (Temperatur des Phasenübergangs flüssigkristallin → isotrop) wurden thermoanalytisch mit einem Differential Scanning Calorimeter und polarisationsmikroskopisch ermittelt.

Bei diesen Messungen ergab sich für das Polymer 1 ein Molekulargewicht $\overline{M}_n$ von 5612, eine Uneinheitlichkeit U von 0,07 sowie eine Klärtemperatur $T_{Kl}$ von 202 °C.

Beispiele 2 bis 8

Die in Tabelle 1 aufgeführten Polymere wurden analog zu Beispiel 1 hergestellt und untersucht.

Tabelle 1: Flüssigkristalline Homo- und Copolymere

| Bsp. | Struktur | $\bar{M}_n$ | U | $T_{Kl}$ [°C] |
| --- | --- | --- | --- | --- |
| 2 | 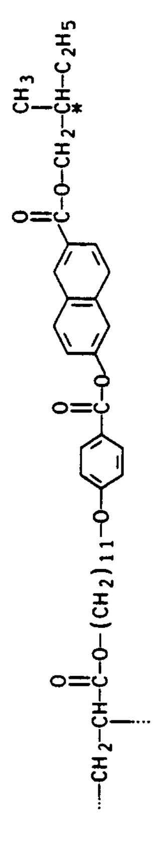 | 4781 | 0,09 | 97 |
| 3 | 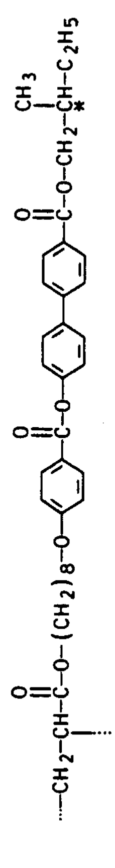 | 4278 | 0,08 | 170 |
| 4 | 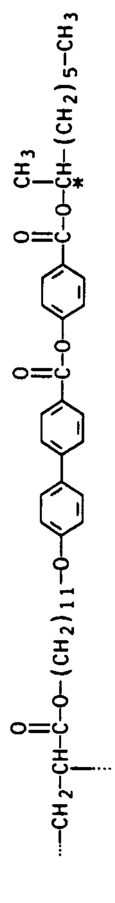 | 6241 | 0,09 | 157 |
| 5 | 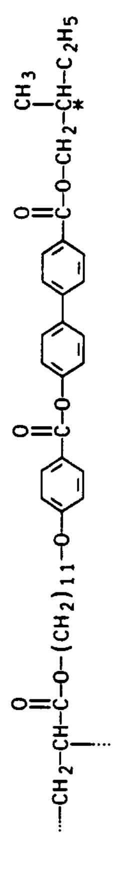 | 6444 | 0,06 | 200 |

Tabelle 1 (Fortsetzung)

| Bsp. | Struktur | $\bar{M}_n$ | U | $T_{Kl}$ [°C] |
|---|---|---|---|---|
| 6 | 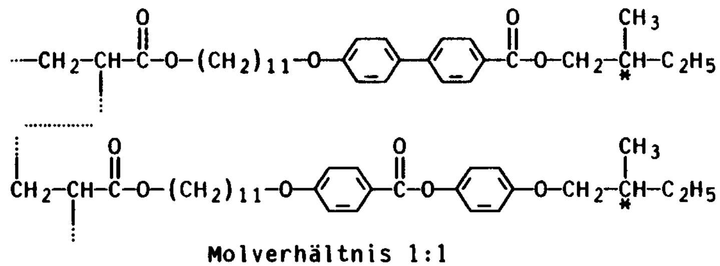 Molverhältnis 1:1 | 5660 | 0,09 | 168 |
| 7 | 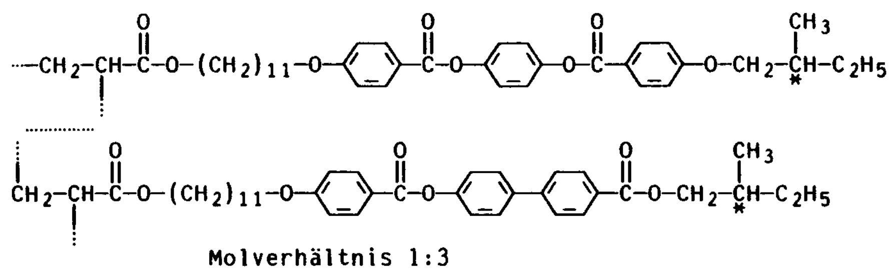 Molverhältnis 1:3 | 4543 | 0,09 | 172 |
| 8 | 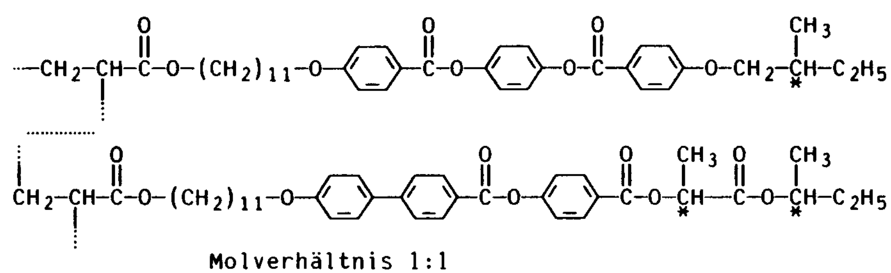 Molverhältnis 1:1 | 4493 | 0,10 | 160 |

b) Anwendungsbeispiel

Eine Probe des Polymers 1 wurde analog zu der Versuchsvorschrift in der DE-A-39 17 196 zwischen strukturierten, elektrisch leitfähig beschichteten, planparallelen Glasplatten, auf die eine Orientierungsschicht

aufgebracht war, präpariert. Die Schichtdicke des Polymers 1 betrug nach interferometrischen Messungen 4 $\mu$m.

Das Füllen dieser Meßzelle mit dem in isotroper Phase vorliegenden Polymer erfolgte durch Kapillarkräfte. Die gewünschte planare Orientierung des Polymers wurde durch langsames Abkühlen unter Anlegen eines elektrischen Feldes erreicht.

Der Tiltwinkel Θ [°] wurde in üblicher und bekannter Weise polarisationsmikroskopisch gemessen.

Die Spontanpolarisation $P_S$ [nC/cm$^2$] wurde nach dem ebenfalls in der DE-A-39 17 196 beschriebenen Dreiecksverfahren bestimmt.

Bei 125 °C ergaben sich für die Probe 1 ein Tiltwinkel Θ von 30 ° und eine Spontanpolarisation $P_S$ von 40,6 nC/cm$^2$. Die Phasenbreite der $S_{C*}$-Phase

$$\Delta T_{S_{C*}}$$

betrug 50 °C.

## Patentansprüche

**1.** Flüssigkristalline Polymere mit nahezu einheitlichem Molekulargewicht, erhältlich durch Polymerisation gleicher oder verschiedener Monomerer der allgemeinen Formel I

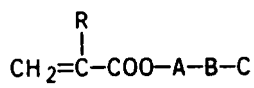 I

in der die Variablen folgende Bedeutung haben:

R Wasserstoff, Chlor oder Methyl;

A flexibler, abstandshaltender langkettiger Molekülteil;

B aus mindestens zwei linear oder angenähert linear miteinander verknüpften aromatischen Kernen aufgebauter mesogener Molekülteil;

C optisch aktiver, chiraler Molekülteil,

in 0,01 bis 0,1 molarer Lösung in einem inerten organischen Lösungsmittel in Gegenwart von 1 bis 40 mol-%, bezogen auf die Monomeren, eines Radikalstarters, bei einer Temperatur zwischen 40 und 60 °C in 100 bis 140 Stunden und anschließende Isolierung des Polymerisationsproduktes aus der Reaktionsmischung.

**2.** Verfahren zur Herstellung von flüssigkristallinen Polymeren mit nahezu einheitlichem Molekülargewicht gemäß der Polymerisationsvorschrift von Anspruch 1.

**3.** Verwendung von flüssigkristallinen Polymeren gemäß Anspruch 1 zum Aufbau der Aufzeichnungsschicht von laseroptischen Aufzeichnungselementen.

**4.** Verwendung von flüssigkristallinen Polymeren gemäß Anspruch 1 zum Aufbau von Aufzeichnungsschichten für die Elektrophotographie.

**5.** Verwendung von flüssigkristallinen Polymeren gemäß Anspruch 1 zum Aufbau der Aufzeichnungsschicht von elektrischen Aufzeichnungselementen.

**6.** Verwendung von flüssigkristallinen Polymeren gemäß Anspruch 1 zum Aufbau von flüssigkristallinen Anzeigeelementen.

## Claims

**1.** A liquid-crystalline polymer of virtually uniform molecular weight, obtainable by polymerizing identical or different monomers of the formula I

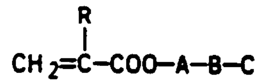

I

where

R is hydrogen, chlorine or methyl,

A is a flexible, long-chain moiety which acts as a spacer,

B is a mesogenic moiety built up from at least two aromatic rings which are linked to one another in a linear or approximately linear manner, and

C is an optically active, chiral moiety,

in from 0.01 to 0.1 molar solution in an inert organic solvent in the presence of from 1 to 40 mol%, based on the monomers, of a free-radical initiator, at from 40 to 60 °C for from 100 to 140 hours, and subsequently isolating the polymerization product from the reaction mixture.

**2.** A process for the preparation of a liquid-crystalline polymer of virtually uniform molecular weight by the polymerization procedure of claim 1.

**3.** The use of a liquid-crystalline polymer as claimed in claim 1 for building up the recording layer of laser-optical recording elements.

**4.** The use of a liquid-crystalline polymer as claimed in claim 1 for building up recording layers for electrophotography.

**5.** The use of a liquid-crystalline polymer as claimed in claim 1 for building up the recording layer of electrical recording elements.

**6.** The use of a liquid-crystalline polymer as claimed in claim 1 for building up liquid-crystalline display elements.

**Revendications**

**1.** Polymères cristallins liquides ayant un poids moléculaire à Peu prés homogène, obtenus par polymérisation de monomères identiques ou différents de formule générale I

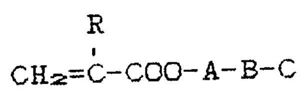

I

dans laquelle les variables ont les significations suivantes:

R atome d'hydrogène, de chlore ou reste méthyle;

A partie flexible de la molécule maintenant l'écartement,

B partie mésogène de la molécule, composée d'au moins deux noyaux aromatiques reliés entre eux de façon linéaire ou approximativement linéaire,

C partie chirale, optiquement active de la molécule,

en solution 0,01 à 0,1 molaire dans un solvant organique inerte, en présence de 1 à 40% en moles, par rapport aux monomères, d'un amorceur radicalaire, à une température comprise entre 40 et 60 °C, pendant 100 à 140 h, puis par isolement du produit de polymérisation d'avec le mélange réactionnel.

**2.** Procédé de préparation de polymères cristallins liquides ayant un poids moléculaire à peu prés homogène, selon le mode opératoire de polymérisation de la revendication 1.

**3.** Utilisation de polymères cristallins liquides selon la revendication 1 pour la constitution de la couche d'enregistrement d'éléments d'enregistrement optique par laser.

**4.** Utilisation de polymères cristallins liquides selon la revendication 1 pour la constitution de couches d'enregistrement pour l'électrophotographie.

**5.** Utilisation de polymères cristallins liquides selon la revendication 1 pour la constitution de la couche d'enregistrement d'éléments d'enregistrement électrique.

**6.** Utilisation de polymères cristallins liquides selon la revendication 1 pour la constitution d'éléments d'affichage à cristaux liquides.